# EUROPÄISCHE PATENTSCHRIFT

(11) **EP 1 498 037 B1**
(45) Veröffentlichungstag und Bekanntmachung des Hinweises auf die Patenterteilung: **11.06.2008**
(21) Anmeldenummer: 04015816.4
(22) Anmeldetag: 06.07.2004
(51) Int. Cl.: A23G 3/22, A23G 3/00, A23G 3/20

(54) **Verfahren und Vorrichtung zum einseitigen Überziehen von Süsswarenkörpern mit Überzugsmasse**
Method and device for single-sided coating of confectionery with coating mass
Procédé et dispositif pour enrobage d'une seule face des confiseries avec de la couverture

(30) Priorität: 18.07.2003 DE 10332706
(43) Veröffentlichungstag der Anmeldung: 19.01.2005
(73) Patentinhaber: Sollich KG, 32105 Bad Salzuflen (DE)
(72) Erfinder: Sollich, Thomas, 32689 Kalletal (DE)
(74) Vertreter: Rehberg Hüppe + Partner

(56) Entgegenhaltungen:
- EP-A- 0 304 570
- EP-A- 0 632 962
- WO-A-99/37163
- DD-A- 208 911
- GB-A- 142 259
- GB-A- 1 546 350

## Beschreibung

Die Erfindung betrifft ein Verfahren zum einseitigen Überziehen von Süßwarenkörpern mit einer fließfähigen Überzugsmasse, indem die Süßwarenkörper auf einem endlosen angetriebenen Transportband aufliegend gefördert und dabei mit einem überschüssig bemessenen Teppich aus der fließfähigen Überzugsmasse auf der zu überziehenden Oberfläche der Süßwarenkörper abgedeckt werden. Die Erfindung bezieht sich auch auf eine Vorrichtung zum einseitigen Überziehen von Süßwarenkörpern mit einer fließfähigen Überzugsmasse, mit einer Einrichtung zur Bildung und Abgabe eines Teppichs aus fließfähiger Überzugsmasse und einem endlosen angetriebenen Transportband, auf dem die Süßwarenkörper abständig aufliegend gefördert und dabei mit dem überschüssig bemessenen Teppich aus der fließfähigen Überzugsmasse auf der zu überziehenden Oberfläche der Süßwarenkörper abgedeckt werden. Unter einer fließfähigen Überzugsmasse wird eine flüssige oder halbflüssige Überzugsmasse verstanden, die zumindest für den Zeitraum zwischen der Bildung eines Teppichs und des Auflegens des Teppichs auf die Süßwarenkörper auf dem Transportband ihre fließfähigen Eigenschaften beibehält, so dass sie eine innig haftende Verbindung zu der zu überziehenden Oberfläche der Süßwarenkörper eingeht. Bei solchen Überzugsmassen kann es sich beispielsweise um eine Zuckerglasur, eine Fettglasur, eine Schokolademasse, eine Geleemasse, eine Karamellmasse oder dergleichen handeln. Die zu überziehenden Süßwarenkörper sind solche fester Gestalt, bei denen die zu überziehende Oberfläche des Süßwarenkörpers zumindest abgesehen von Randbereichen relativ ebenflächig ausgebildet ist, etwa im Gegensatz zur domartig aufgewölbten Form einer Praline oder dergleichen. Typische solche einseitig zu überziehende Süßwarenkörper sind Gebäckstücke, also Kekse, Waffeln und dgl., aber auch beispielsweise Abschnitte aus Fruchtmassen, Riegelware oder dergleichen, also jedenfalls Körper mit in der Regel fester Konsistenz mit zumindest teilweise eben und großflächig ausgebildeter zu überziehender Oberfläche. Von Bedeutung ist auch die Schichtstärke des Überzugs. Es geht dabei darum, den Überzug auf den Süßwarenkörpern möglichst gewichtsgenau und gleichmäßig verteilt aufzubringen. Dabei sollen eher dickere Überzüge aufgebracht werden, etwa im Bereich einer Dicke von 1-5 mm.

Von besonderer Bedeutung ist auch, dass der Überzug nur auf einem Teil der Oberfläche der Süßwarenkörper aufgebracht werden soll. Dies bedeutet, dass der Teil der Oberfläche, der mit der Überzugsmasse versehen werden soll, nach dem Überziehen eine geschlossene Oberfläche ohne Löcher und ohne Fehlstellen an Überzugsmasse aufweisen darf. Andererseits darf der Teil der Oberfläche des Süßwarenkörpers, der nicht mit Überzugsmasse überzogen werden soll, auch nicht mit Überzugsmasse in Kontakt geraten. In der Regel wird also der nach unten weisende Boden des Süßwarenkörpers völlig sauber bleiben müssen. Er darf auch nicht von Tropfen, Spritzern, Nasen oder dergleichen der Überzugsmasse verschmutzt sein, weil dies einen unschönen Anblick darbietet, der auf eine nicht sorgfältige Herstellung rückschließen lässt. Dabei geht es auch darum, die sich zwischen Oberseite und Unterseite des Süßwarenkörpers erstreckenden Randbereiche in ihrer vertikalen Erstreckung möglichst sauber und geradlinig begrenzt abzudecken.

### STAND DER TECHNIK

Ein Verfahren und eine Vorrichtung der eingangs beschriebenen Art sind aus der DE 27 38 894 C2 bekannt. Als Überzugsmasse dient eine fließfähige Schokolademasse, die auf die Süßwarenkörper aufgebracht wird. Als endlos angetriebenes Transportband wird ein netzartig durchbrochenes Gitterband eingesetzt, auf dem ein überschüssig bemessener Teppich aus Überzugsmasse ohne Unterbrechung abgelegt wird. Die überschüssige Überzugsmasse durchdringt das Gitterband und wird in einem Speicher aufgefangen, von dem die Überzugsmasse wiederum in eine Einrichtung zur Bildung des Teppichs aus fließfähiger Überzugsmasse zurückgeführt wird. Die Einrichtung zur Bildung und Abgabe des Teppichs weist eine angetriebene Walze auf, gegen deren Oberfläche ein Vorratsbehälter zur Bereithaltung der Überzugsmasse angestellt ist. Zwischen der Wandung des Vorratsbehälters und der Oberfläche der Walze wird ein Spalt gebildet, dessen Spaltweite zur Bestimmung der Dicke des Teppichs mit einem Vorabstreifer einstellbar ausgebildet ist. Ein weiterer Abstreifer befindet sich in Umlaufrichtung hinter dem tiefsten Punkt der Trommel oder Walze und in nur geringer Höhe oberhalb der auf dem Gitterband aufliegenden Süßwarenkörper. Der Teppich aus Überzugsmasse wird nicht allein durch Schwerkraft auf die zu überziehende Oberfläche der Süßwarenkörper aufgelegt, sondern gleichsam eingewaschen, um eine stark zerklüftete Oberfläche der Süßwarenkörper mit einem gleichmäßigen geschlossenen Überzug zu versehen. Zu diesem Zweck ist die Umfangsgeschwindigkeit der Trommel relativ zu der Geschwindigkeit des Gitterbandes regelbar. Durch diese Relativbewegung soll die Schokoladenmasse gleichsam in schlecht zugängliche Stellen in der Oberfläche der Süßwarenkörper einmassiert werden. Nachteilig hieran ist, dass der Teil der Überzugsmasse, der im Überschuss eingesetzt wird, das Gitterband durchdringt und dieses dabei stark verschmutzt. Damit lässt es sich nicht vermeiden, dass Überzugsmasse, die von dem Gitterband mitgeschleppt wird, beim Auflegen weiterer Süßwarenkörper mit deren Bodenbereich in Kontakt kommt. Der Bodenbereich kommt damit unregelmäßig mit Überzugsmasse in Kontakt. Der Boden wird mit Tropfen oder Bereichen von Überzugsmasse versehen, obwohl er an sich sauber bleiben soll. Auch in den Randbereichen der Süßwarenkörper ergibt sich eine unregelmäßig gestaltete Abgrenzung am Rand der Überzugsmasse, die sich in tropfen- oder nasenartigen Ablagerungen der Überzugsmasse äußert. All dies ist für das dekorative saubere Aussehen eines einseitig überzogenen Süßwarenkörpers nachteilig. Beim weiteren Transport der überzogenen Süßwarenkörper besteht die Gefahr, dass die noch nicht kristallisierte Schokolademasse durch den Kontakt mit dem Transportband im Bereich der Ränder der Süßwarenstücke unregelmäßig verformt wird. Auch dies stört das Aussehen der hergestellten Produkte. Ein Produktwechsel, bei dem beispielsweise eine dunkle Überzugsmasse durch eine helle Überzugsmasse oder umgekehrt ausgetauscht werden soll, erfordert zunächst eine sorgfältige Reinigung des Gitterbandes, so dass sich erhebliche Umrüstzeiten ergeben.

Übliche Überziehmaschinen, wie sie beispielsweise aus der EP 0 603 781 B1 bekannt sind, dienen zum Überziehen von Süßwarenkörpern mit Schokolade und ähnlichen Massen. Sie weisen ein endloses umlaufend angetriebenes Gitterband zur Aufnahme der zu überziehenden Süßwarenkörper auf, welches über Umlenkungen geführt wird. Eine solche Überziehmaschine besitzt in der Regel einen Schleierkasten zum Bilden eines im freien Fall sich über die Süßwarenkörper ergießenden Vorhangs aus flüssiger Schokolademasse. Durch den Einsatz eines Gebläses und/oder einer Rüttelvorrichtung wird versucht, überschüssige Überzugsmasse, die nicht aufgrund der Schwerkraft von den benetzten Süßwarenkörpern durch das Gitterband hindurch abtropft, abzublasen und abzurütteln. Hierdurch werden in nachteiliger Weise die Randbereiche der Süßwarenkörper, die sich etwa vertikal erstrecken, dünner beschichtet als flache Horizontalbereiche der Süßwarenkörper. Auch hier wird das Gitterband durch die Überzugsmasse erheblich verschmutzt, so dass sich am Boden der Süßwarenkörper entsprechende unschöne Abdrücke an den nachfolgenden Süßwarenkörpern bilden. Es besteht bei einem Gitterband praktisch keine Möglichkeit, dieses im Bereich des Rücklaufs von der Schokolademasse zu reinigen oder einen Abstreifvorgang durchzuführen. Vielmehr wird das Gitterband auch im Rücklauf immer wieder mit Schokolade benetzt, so dass die zu überziehenden Süßwarenkörper im Bodenbereich mit Überzugsmasse verschmutzt werden, es sei denn, es ist eine Bodenüberziehstation vorgesehen und die Süßwarenkörper sollen auf ihrer gesamten Oberfläche überzogen werden. Herkömmliche Überziehmaschinen ermöglichen die Aufbringung nur relativ dünner Überzüge, etwa im Bereich von 1-2 mm Dicke. Voraussetzungen sind ausreichende Fließeigenschaften der Überzugsmasse, um diese durch Pumpen in Bewegung zu halten. Vergleichsweise viskosere Massen lassen sich mit bekannten Überziehmaschinen nicht verarbeiten. Um hier dickere Überzüge auf die Süßwarenkörper aufzubringen, ist es bekannt, die Süßwarenkörper zweimal zu überziehen. In einer ersten Überziehmaschine mit anschließender Kühlung wird eine erste Schicht aufgebracht und zur Erstarrung gebracht. Anschließend wird in einer zweiten Überziehmaschine, wiederum mit nachgeschalteter Kühlung, eine weitere Schicht Stärke aufgebracht. Solche Anlagen bauen relativ lang und sind kostspielig.

Vergleichsweise viskosere Massen können auf speziellen Gießmaschinen vergossen werden, d. h. von oben auf die Süßwarenkörper tropfen- bzw. portionsweise aufgebracht werden. Dabei wird eine Portion Überzugsmasse beispielsweise mit Hilfe einer Kolbenpumpe lagegenau und volumenkontrolliert auf die Oberfläche eines Süßwarenkörpers ausgegossen. Da ein Gießtropfen auf dem Süßwarenkörper immer kreisrund verläuft, lässt sich dieses Verfahren nur für runde Süßwarenkörper anwenden. Z. B. bei rechteckig begrenzten Keksen lässt sich kein zufriedenstellendes Ergebnis erreichen.

Aus der EP 0 304 570 B1 ist ein Verfahren und eine Vorrichtung zur kontinuierlichen Herstellung einer in Stangen oder Riegel zu unterteilenden, gegebenenfalls mehrschichtigen Materialbahn aus noch formbarer, heißer Süßwarenmasse bekannt. Diese Masse wird kalibriert auf die Oberfläche einer Trommel aufgegeben, mit Streugut bestreut. Der so gebildete Teppich wird auf ein Transportband abgelegt und in Längs- und Querrichtung aufgeschnitten, so dass aus dem Teppich die einzelnen Süßwarenstücke entstehen.

Aus der DD 208 911 A ist eine Vorrichtung zum Beschichten einzelner auf einer Transportvorrichtung aneinander anliegend transportierter Waffelblätter od. dgl. Backprodukte mit einer Streichmasse, insbesondere Karamell, bekannt, mit der eine Schicht aus der Streichmasse auf die gemeinsame Oberfläche der aneinander anliegend transportierten, also ohne gegenseitigen Abstand angeordneten bzw. aufgelegten Süßwarenkörper aufgebracht wird. Die Schicht ist in der Schichtdicke festgelegt, ansonsten aber kleiner bemessen als die gemeinsame Oberfläche der aneinander anliegenden Süßwarenkörper, sodass ohne Überschuss gearbeitet wird. Die sich vertikal erstreckenden Ränder der Süßwarenkörper dürfen von der Schicht nicht erfasst und damit nicht verschmutzt werden. Da ohne Überschuss gearbeitet wird, muss auch keine überschüssige Masse von dem Band entfernt werden. Lediglich solche Masseteilchen, die durch einen Querschneider entlang der Ränder unbeabsichtigt erfasst werden und so auf das Band gelangen, werden mit einem Abstreifer entfernt, der am unteren Trumm des Bandes angestellt ist.

### AUFGABE DER ERFINDUNG

Der Erfindung liegt die Aufgabe zugrunde, ein Verfahren und eine Vorrichtung der eingangs beschriebenen Art bereitzustellen, mit denen flache Süßwarenkörper einseitig gewichtsgenau reproduzierbar und in gleichmäßiger Verteilung der Überzugsmasse auf der zu überziehenden Oberfläche einschließlich mindestens eines Randbereiches überzogen werden können, ohne dass dabei der nicht zu überziehende Bodenbereich mit Resten von Überzugsmasse in Kontakt kommt.

### LÖSUNG

Die Aufgabe der Erfindung wird erfindungsgemäß durch ein Verfahren mit den Merkmalen des unabhängigen Patentanspruchs 1 sowie durch eine Vorrichtung mit den Merkmalen des unabhängigen Patentanspruchs 5 gelöst.

### BESCHREIBUNG DER ERFINDUNG

Durch das Auflegen der Süßwarenkörper auf ein Transportband mit geschlossener Oberfläche, also beispielsweise ein Stahlband, ein Kunststoffband oder dergleichen, und das Abdecken mit einem zumindest in Arbeitsrichtung überschüssig bemessenen Teppich wird zunächst verhindert, dass überschüssige Überzugsmasse durch die Durchbrechungen eines Gitterbandes hindurchtreten kann. Dies trägt zu einer vergleichsweisen Erhöhung der Überzugsdicke in den im Wesentlichen sich vertikal erstreckenden Randbereichen der Süßwarenkörper bei. Auf einem Transportband mit geschlossener Oberfläche wird das Abfließen von Überzugsmasse in den Randbereichen nach unten und die damit verbundene Schichtdickenverringerung behindert. Vorteilhaft wird der kalibrierte Teppich an Überzugsmasse mit genau eingehaltenem Gewicht und Dicke geschwindigkeitskonform auf die Oberfläche der Süßwarenkörper abgelegt. Der Teppich, der auf die auf dem Transportband liegenden Süßwarenkörper abgelegt wird, wird mit einer Bildungsgeschwindigkeit erzeugt bzw. gebildet, die zwischen dem Einfachen und etwa dem Fünffachen der Bewegungsgeschwindigkeit des Transportbandes bemessen ist. Es soll ein Strecken oder Auseinanderziehen des sich bildenden Teppichs vermieden werden. Es wird vorwiegend im Bereich der Aufdickung gearbeitet, insbesondere wenn es um vergleichsweise dicke Teppiche geht. Der Teppich gelangt so und verbleibt auf den Süßwarenkörpern. Der Teppich deckt in dieser Stellung gleichsam wie ein in Arbeitsrichtung durchgehendes Tuch sowohl die Süßwarenkörper wie auch die entsprechende Oberfläche des Transportbandes ab. In dieser Relativlage werden die Teile unter Nutzung der Verweilzeit auf dem Transportband in Kontakt gehalten, so dass eine dauerhafte Haftung und damit eine sichere Verankerung der Überzugsmasse auf der zu überziehenden Oberfläche der Süßwarenkörper erreicht wird. Vorteilhaft lässt das Verfahren auch die Aufbringung vergleichsweise dickerer Überzüge als im Stand der Technik zu. Erst an dem Umlenkende des Transportbandes im Bereich der in Förderrichtung liegenden Umlenkwalze oder Umlenkkante erfolgt die Trennung der überschüssigen Überzugsmasse von dem Teil der Überzugsmasse, der auf der zu überziehenden Oberfläche der Süßwarenkörper verbleibt. Die Umlenkung des Transportbandes an dieser Stelle führt zu einer Richtungsänderung des Teils der Überzugsmasse, der sich auf der Oberfläche des Transportbandes abgelagert hat. Durch diese Richtungsänderung entsteht ein Trenneffekt im Randbereich der Überzugskörper, wobei die Überzugsmasse entlang dieses Randbereiches relativ scharfkantig und sauber durchtrennt wird, ohne dass Nasen oder Fortsätze an Überzugsmasse im Randbereich der Süßwarenkörper haften bleiben. Hohe Arbeitsgeschwindigkeiten sind für diesen Trenneffekt durchaus nicht nachteilig, sondern eher vorteilhaft. Die einseitig überzogenen Süßwarenkörper werden ohne Richtungsänderung von dem Transportband an ein Austrageband übergeben, während die Überzugsmasse unter Richtungsänderung nach unten an dieser Stelle abgeführt wird. Das Transportband mit geschlossener Oberfläche lässt sich beispielsweise durch einen angestellten Abstreifer kontinuierlich reinigen, so dass bei der kontinuierlichen Herstellung weitere Süßwarenstücke mit ihrem Boden immer auf ein sauberes Transportband aufgelegt werden. Dies verhindert einen Kontakt mit Überzugsmasse im Bodenbereich der Süßwarenkörper. Gitterbandabdrücke werden vermieden. Bei Verwendung von z. B. einer Fettglasur oder Schokolademasse als Überzugsmasse werden die Süßwarenkörper in kaltem Zustand auf das Transportband aufgelegt. Die Fettglasur oder Schokolademasse wird durch Kühlung auf der überzogenen Oberfläche verfestigt. Bei Verwendung von zuckerhaltigen Überzügen können die Süßwarenstücke, beispielsweise Lebkuchen, auch in warmem Zustand, beispielsweise unmittelbar nach einem Backvorgang, auf das Transportband aufgelegt werden. Hier findet ein Trocknungsvorgang statt, der die Verfestigung der Überzugsmasse herbeiführt. Die Verwendung eines Transportbandes mit geschlossener Oberfläche erscheint im Zusammenhang mit einer überschüssig anzuwendenden Überzugsmasse zunächst unsinnig, weil ein solches Transportband zunächst die Trennung des überschüssigen Teils von dem bestimmungsgemäß aufgebrachten Teil der Überzugsmasse verhindert. Ein Transportband mit geschlossener Oberfläche erbringt aber einerseits eine Vergleichmäßigung der Schichtdicke des Überzugs auch im Randbereich und lässt es andererseits zu, dass die Oberfläche des Transportbandes leicht gereinigt werden kann. Verschmutzungseffekte des nicht zu überziehenden Bodenbereichs der Süßwarenkörper werden erheblich reduziert. Die auf diese Weise einseitig überzogenen Produkte besitzen ein sauberes und dekoratives Aussehen.

Um eine gewisse Nacharbeit an der Überzugsmasse im Randbereich der Süßwarenstücke stromab des Umlenkendes des Transportbandes zu ermöglichen, kann im Übergangsspalt zwischen dem Transportband und dem Austrageband mindestens eine angetriebene Leckwelle zur Säuberung der Ränder der Süßwarenkörper vorgesehen sein. Auch die Anordnung mehrerer solcher Leckwellen ist sinnvoll. Mehrere Leckwellen mit vergleichsweise kleinem Durchmesser ergeben bessere Arbeitsergebnisse als eine Leckwelle mit relativ großem Durchmesser. Erforderlich ist eine solche Leckwelle jedoch nicht in allen Anwendungsfällen.

Das Verfahren und die Vorrichtung ermöglichen es auch, anstatt eines über die Arbeitsbreite durchgehenden Teppichs mehrere Teppichstreifen nebeneinander ab- und aufzulegen. Diese Teppichstreifen gehen also nur in Arbeitsrichtung durch und können in unterschiedlicher Relativlage auf die gesamte oder nur einen Teil der Oberfläche der Süßwarenkörper abgelegt werden. Damit entsteht die Möglichkeit für eine Dekorwirkung bzw. die gezielte Aufbringung eines Überzugs nur in einem Teil der Oberfläche der Süßwarenkörper, so dass damit gleichzeitig ein Dekor entsteht. Beispielsweise können runde Kekse mit einem sich halbkreisförmig darbietenden Überzug versehen werden oder es können rechteckige Waffelstücke streifen- oder kantenartig in Längsrichtung überzogen werden. Auch der Wechsel zwischen einem durchgehenden Teppich und den beschriebenen Streifenteppichen ist mit vergleichsweise kurzer Umrüstzeit der Vorrichtung möglich. Ebenso können Massewechsel der Überzugsmasse sehr schnell und problemlos durchgeführt werden. Auch Änderungen und Einstellungen der Schichtdicke der Überzugsmasse sind innerhalb kürzester Zeit erreichbar. Dies kann durch Veränderung der Spaltweite und/oder Erhöhung der Drehzahl der Trommel relativ zur Bewegungsgeschwindigkeit des Transportbandes geschehen, wenn als Einrichtung zur Bildung und Abgabe des Teppichs eine angetriebene Trommel eingesetzt wird. Auch bei Einrichtungen zur Bildung und Abgabe des Teppichs, die unter Schwerkrafteinfluss arbeiten, kann die Spaltweite verändert eingestellt werden.

Mit dem neuen Verfahren und der Vorrichtung wird ein Teppich oder mehrere Teppichstreifen aus fließfähiger Überzugsmasse gebildet, wobei diese Überzugsmasse auch nach dem Auflegen auf die Oberfläche der Süßwarenkörper und des Transportbandes ihre Fließeigenschaften für eine gewisse Zeitspanne beibehält. Diese Zeitspanne wird genutzt, und zwar relativ zur Umlenkstelle des Transportbandes und damit zu der Trennung des überschüssigen Teils der Überzugsmasse von dem bestimmungsgemäß aufgebrachten Teil.

Besonders sinnvoll ist es, wenn die Einrichtung zur kontinuierlichen Bildung und Abgabe eines Teppichs oder mehrerer Teppichstreifen aus fließfähiger Überzugsmasse eine angetriebene Trommel aufweist, gegen deren Oberfläche ein Vorratsbehälter für die fließfähige Überzugsmasse unter Spaltbildung angestellt ist. Dabei ist ein Antrieb für die Trommel mit einer Oberflächengeschwindigkeit vorgesehen, die größer oder zumindest gleich der Oberflächengeschwindigkeit des Transportbandes ist. Die Umfangsgeschwindigkeit der Trommel ist mindestens so groß wie die Oberflächengeschwindigkeit des Transportbandes. Die Umfangsgeschwindigkeit der Trommel kann aber auch bis zum Fünffachen größer sein als die Oberflächengeschwindigkeit des Transportbandes. Letzteres gilt insbesondere für relativ dicke Überzüge. Die Bewegungsgeschwindigkeit des Transportbandes stimmt jedoch in allen Fällen mit der Bildungs- und Abgabegeschwindigkeit des Teppichs am Übergang von der Trommel auf das Transportband überein. Die fließfähige Überzugsmasse in Teppichform wird also nicht gedehnt oder anderweitig in ihrer Schichtdicke reduziert, sondern entweder konstant gehalten oder aufgedickt. In dieser kalibrierten Form wird der Teppich auf die zu überziehende Oberfläche sowie die benetzte Oberfläche des Transportbandes auf- und abgelegt. Die Verwendung einer solchen angetriebenen Trommel wirkt sich vorteilhaft auf die Konstanz der Überzugsdicke aus. Der Spalt zwischen Trommel und Vorratsbehälter kann in einfacher Weise durch ein Wehr ein- und verstellt werden, so dass entsprechend der veränderten Spaltweite und unter Berücksichtigung der Oberflächengeschwindigkeiten unterschiedliche volumetrisch dosierte Schichtdicken erzielbar sind.

Eine andere Möglichkeit der Ausbildung der Einrichtung zur kontinuierlichen Bildung und Abgabe eines Teppichs oder mehrerer Teppichstreifen sieht lediglich einen Vorratsbehälter für die Überzugsmasse vor, der im unteren Bereich einen sich quer zur Laufrichtung des Transportbandes erstreckenden Schlitz zum Austritt des Teppichs oder von Schlitzabschnitten zum Austritt der Teppichstreifen unter Schwerkrafteinfluss besitzt. Auch hierbei kann die Spaltweite durch ein Wehr oder dergleichen eingestellt bzw. verstellt werden.

Als Transportband mit geschlossener Oberfläche kann ein solches aus einem Metallband, beispielsweise Stahl, aber auch aus Kunststoff, aus Gewebe oder dergleichen, eingesetzt werden. Solche Transportbänder können auch mehrschichtig aufgebaut sein bzw. werden. Wesentlich ist nur, dass sie entsprechend biegsam ausgebildet sind, damit insbesondere das stromab liegende Umlenkende unter Einhaltung eines relativ kleinen Radius gestaltet werden kann, mit dem eine möglichst abrupte Richtungsänderung zwischen überzogenem Süßwarenkörper einerseits und Transportband andererseits möglich ist.

Die Einrichtung zur kontinuierlichen Bildung und Abgabe eines Teppichs oder mehrerer Teppichstreifen kann bzw. sollte temperierbar ausgebildet sein. Dies gilt sowohl für die Trommelbauart wie auch für die Bauart in Form lediglich eines unten offenen Behälters. Diese Elemente können beispielsweise doppelwandig ausgebildet und an einen Temperierkreislauf angeschlossen sein. Auch die Einschaltung von Heiz- oder Kühlelementen innerhalb der Aufnahmeräume für die Überzugsmasse in den Vorratsbehältern kann für eine Temperierung der Überzugsmasse genutzt werden. Bei Verwendung von Überzugsmassen, die einem fortlaufenden Kristallisationsprozess unterliegen, wie dies beispielsweise bei Schokolademasse der Fall ist, muss für eine Konstanz des Temperiergrads dieser Überzugsmasse in dem Vorratsbehälter gesorgt werden. In diesem Falle empfiehlt sich insbesondere eine überschüssige Beschickung bzw. ein fortwährender Austausch von Überzugsmasse in dem Vorratsbehälter.

Trommel und/oder Vorratsbehälter können relativ zu der Oberfläche des Transportbandes und oberhalb desselben höhenverstellbar angeordnet sein, um den noch fließfähigen Teppich mit möglichst geringer Fallhöhe bzw. entsprechend den Eigenschaften der jeweiligen Überzugsmasse gleichsam tuchartig auf die durch die Süßwarenkörper zerklüftete Oberfläche des Transportbandes abzulegen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine schematisierte Seitenansicht der Vorrichtung in einer ersten Ausführungsform.
- **Fig. 2**: zeigt eine vergrößerte Darstellung eines Ausschnittes aus Fig. 1.
- **Fig. 3**: zeigt eine Draufsicht auf die Vorrichtung gemäß Fig. 1.
- **Fig. 4**: zeigt eine schematisierte Seitenansicht einer weiteren Ausführungsform der Vorrichtung.
- **Fig. 5**: zeigt eine Draufsicht auf die Vorrichtung gemäß Fig. 4.
- **Fig. 6**: zeigt eine weitere schematisierte Seitenansicht einer dritten Ausführungsform der Vorrichtung.
- **Fig. 7**: zeigt eine Draufsicht auf einen Ausschnitt der Vorrichtung gemäß Fig. 6.
- **Fig. 8**: zeigt eine Draufsicht auf einen streifenartig überzogenen Süßwarenkörper.
- **Fig. 9**: zeigt eine Schnittdarstellung des Süßwarenkörpers gemäß der Schnittangabe IX-IX in Fig. 8.

### FIGURENBESCHREIBUNG

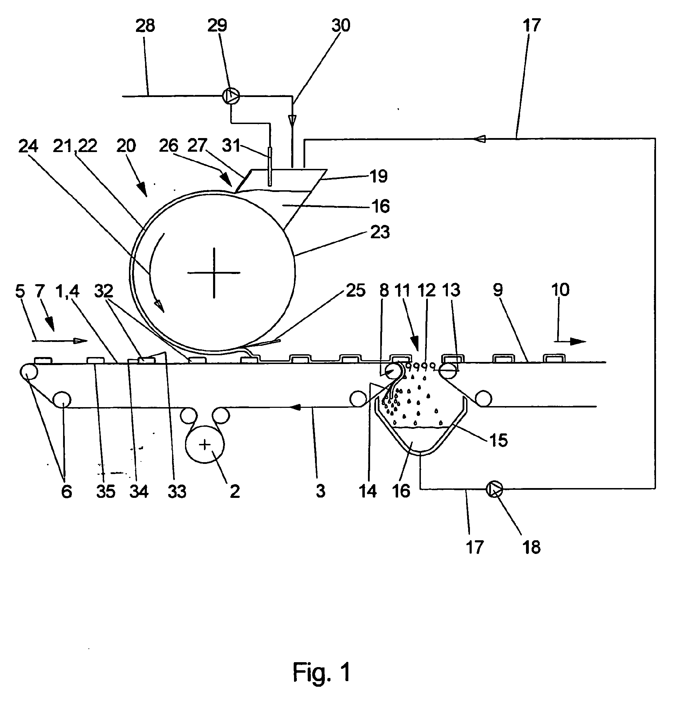

**Fig. 1** zeigt eine schematisierte Seitenansicht der Vorrichtung mit den für die Erfindung wesentlichen Teilen. Bestandteil der Vorrichtung ist ein endloses Transportband 1, welches von einem Antrieb mit einer Antriebswalze 2 gemäß Pfeil 3 umlaufend angetrieben wird. Bei dem Transportband 1 handelt es sich um ein solches mit geschlossener Oberfläche 4, also beispielsweise ein Transportband aus einem dünnen biegsamen Metallbandstreifen, einem Streifen aus Kunststoff, Gewebe oder dergleichen. Das Transportband 1 mit der geschlossenen Oberfläche 4 unterscheidet sich dem gemäß von einem üblichen Gitterband dadurch, dass durch das Transportband 1 keine Masse hindurchtreten kann.

Das Transportband 1 wird in Richtung eines Pfeils 5 umlaufend angetrieben und dabei über Umlenkrollen geführt. Auf diese Weise wird im oberen Trum des Transportbandes 1 ein Anfangsbereich 7 gebildet. Der obere Trum des Transportbandes 1 endet an einem Umlenkende 8, in dessen Bereich ebenfalls mindestens eine Umlenkrolle vorgesehen oder eine Messerkante gebildet ist.

Dem Transportband 1 ist ein Austrageband 9 nachgeschaltet, welches gemäß Pfeil 10 mit gleicher Geschwindigkeit angetrieben wird wie das Transportband 1. Im Anschluss an das Umlenkende 8 befindet sich zwischen dem Transportband 1 und dem Anfang des Austragebandes 9 ein Spalt 11, in welchem mindestens eine Leckwelle 12 vorgesehen ist. Bei der Ausführungsform gemäß Fig. 1 sind hier vier Leckwellen 12 hintereinander angeordnet und in ihrem unteren Bereich mit Abstreifern 13 versehen. Auch die Leckwellen 12 werden mit der gleichen Oberflächengeschwindigkeit angetrieben wie das Transportband 1 und das Austrageband 9. In Zuordnung zu dem Umlenkende 8 des Transportbandes 1 ist unterhalb des Umlenkendes 8 ein weiterer Abstreifer 14 vorgesehen, der gegen die Oberfläche des Transportbandes 1 an der gezeigten Stelle angestellt ist. Die Anstellung kann federbelastet sein. Sie ist in der Regel ein- und verstellbar ausgebildet. Die Abstreifer 13 und 14 erstrecken sich zumindest über die Arbeitsbreite des Transportbandes 1.

Unterhalb des Spaltes 11 ist eine Wanne 15 angeordnet, die zum Auffangen überschüssiger Überzugsmasse 16 dient. Es handelt sich um fließfähige Überzugsmasse 16, die insoweit auch pumpbar ist. Die Wanne 15 besitzt Anschluss an eine Rückführleitung 17, in der eine Pumpe 18 angeordnet ist. Die Rückführleitung 17 führt zu einem Vorratsbehälter 19, in dem sich ebenfalls Überzugsmasse 16 befindet. Der Vorratsbehälter 19 ist Bestandteil einer Einrichtung 20 zur Bildung eines Teppichs 21 oder mehrerer Teppichstreifen 22 aus Überzugsmasse 16. Die Einrichtung 20 weist eine Trommel 23 auf, die gemäß Pfeil 24 umlaufend mit gleicher Oberflächengeschwindigkeit angetrieben wird, wie es auch dem Transportband 1 entspricht. Im unteren Bereich der Trommel 23 ist ein Abstreifer 25 angeordnet. Auch der Abstreifer 25 ist gegen die Oberfläche der Trommel 23 anstellbar. Die Anstellkraft ist insbesondere variabel ausgebildet. Der Abstreifer befindet sich kurz hinter dem tiefsten Ende der Trommel 23 und in vergleichsweise geringer Höhe oberhalb der Oberfläche des Transportbandes 1. Die gesamte Einrichtung 20 kann höhenverstellbar zur Oberfläche des Transportbandes 1 angeordnet sein.

Der Vorratsbehälter 19 ist unter Bildung eines Spaltes 26 gegen die Oberfläche der Trommel 23 angestellt. Zur Veränderung und Einstellung der Spaltweite kann ein Wehr 27 vorgesehen sein, welches sich in der Regel über die Arbeitsbreite erstreckt und relativ zu einer Seitenwandung des Vorratsbehälters 19 einstellbar vorgesehen ist.

Zur Befüllung des Vorratsbehälters 19 mit Überzugsmasse 16 ist eine Leitung 28 vorgesehen, in der eine Pumpe 29 angeordnet ist, so dass auf diesem Wege Überzugsmasse gemäß Pfeil 30 in den Vorratsbehälter 19 gelangt. Im Vorratsbehälter 19 wird Überzugsmasse 16 unter Spiegelbildung überschüssig bevorratet bzw. nachgeliefert. Hierzu kann der Vorratsbehälter 19 mit einem Fühler 31 versehen sein, von dessen Ausgangssignal die Pumpe 29 geschaltet wird. Auf diesem Wege wird erreicht, dass der Vorratsbehälter 19 mit Überzugsmasse 16 immer hinreichend befüllt gehalten wird. Es ist erkennbar, dass auch die Rückführleitung 17 in den Vorratsbehälter 19 mündet.

Die Vorrichtung wird wie folgt betrieben:

Nach Befüllung des Vorratsbehälters 19 mit Überzugsmasse 16 kann der Überziehvorgang eingeleitet werden. Die Überzugsmasse 16 ist eine zuckerhaltige oder eine fetthaltige fließfähige Masse flüssiger oder halbflüssiger Konsistenz. Durch den Antrieb der Trommel 23 in Drehrichtung gemäß Pfeil 24 wird auf der Oberfläche der Trommel 23 ein Teppich 21 mit kalibrierter Schichtdicke gebildet, der um etwa 180° auf der Oberfläche der Trommel 23 verbleibt und dessen Ablösung von der Trommel durch den Abstreifer 25 unterstützt wird. Auf die Oberfläche des Transportbandes 1 werden im Anfangsbereich 7 Süßwarenkörper 32 aufgelegt. Dies geschieht reihenweise bzw. gruppenweise. Bei den Süßwarenkörpern 32 handelt es sich beispielsweise um Kekse, Waffeln, Riegelware oder dergleichen. Die einzelnen Süßwarenkörper 32 werden getrennt voneinander, also mit gegenseitigem Abstand, auf die Oberfläche des Transportbandes 1 abgelegt. Dies kann in ausgerichteter oder auch weniger ausgerichteter Weise erfolgen. Die Süßwarenkörper 32 weisen eine weitgehend ebene Oberfläche 33 auf, die sich zumindest über einen Großteil jedes Süßwarenkörpers 32 erstreckt. Des Weiteren besitzen die Süßwarenkörper 32 sich im Wesentlichen vertikal erstreckende Randbereiche 34, die ebenfalls überzogen werden sollen. Schließlich weist jeder Süßwarenkörper 32 noch einen Boden 35 auf, der nicht überzogen und nicht verschmutzt werden soll. Der Süßwarenkörper 32 liegt mit seinem Boden 35 auf der Oberfläche des Transportbandes 1 auf. In dieser Relativlage wandern die nackten Süßwarenkörper 32 gemäß Pfeil 5 unter der Einrichtung 20 hindurch. An der dargestellten Stelle wird der mit Hilfe der Einrichtung 20 und insbesondere der Trommel 23 gebildete und überführte Teppich 21 aus fließfähiger Masse auf die Oberfläche des Transportbandes 1 einschließlich der darauf liegenden Süßwarenkörper 32 aufgelegt, so dass die Süßwarenkörper 32 gleichsam ganzflächig mit dem Teppich 31 abgedeckt werden, der sich über die Arbeitsbreite der Vorrichtung erstreckt. Dies kann so geschehen, dass die Oberflächengeschwindigkeit der Trommel mit der Oberflächengeschwindigkeit des Transportbandes übereinstimmt, sodass die Dicke des Teppichs von dem Spalt 26 bis zum Ablegen auf dem Transportband 1 konstant bleibt. Es ist aber auch möglich, die Trommel 23 mit einer höheren Oberflächengeschwindigkeit als die Oberflächengeschwindigkeit des Transportbandes 1 anzutreiben, um auf diese Weise eine Aufdickung des Teppichs 31 während des Ablegens auf der Oberfläche des Transportbandes 1 zu erreichen. Während der Weiterbewegung der abgedeckten Süßwarenkörper 32 in Richtung auf das Umlenkende 8 des Transportbandes entsteht eine hinreichende Haftung und Verankerung des Teppichs 21 aus Überzugsmasse 16 auf der zu überziehenden Oberfläche der Süßwarenkörper 32 und damit im Bereich der Oberfläche 33 sowie der Randbereiche 34. Gleichzeitig entsteht auch eine gewisse Haftung des Teppichs 21 an der Oberfläche des Transportbandes 1 in all jenen Bereichen, an denen sich keine Süßwarenkörper 32 befinden. Diese Haftung wird in Verbindung mit der geradlinigen Weiterförderung der überzogenen Süßwarenkörper 32 über den Spalt 11 hinweg in den Bereich des Austragebandes 9 dazu benutzt, um den überschüssigen Teppich im Bereich des Spaltes 11 nach unten zu fördern und auf diese Weise einen Abreißeffekt der Bereiche des Teppichs zu erzielen, die sich entlang jedes Randbereiches der Süßwarenhohlkörper 32 erstreckt. Der Teppich 21 in Form des überschüssigen Materials wird also im Bereich des Umlenkendes 8 des Transportbandes 1 nach unten mitgenommen. Der Abstreifer 14 sorgt dafür, dass diese Masse in die Wanne 15 gelangt und gleichzeitig die Oberfläche des Transportbandes 1 verlässlich gereinigt wird. Damit ist die Gewähr dafür gegeben, dass neue Süßwarenkörper 32 im Anfangsbereich 7 des Transportbandes 1 mit ihren Böden 35 ohne Verschmutzungsgefahr aufgelegt werden können. Die Eigenschaften der Überzugsmasse bzw. des Teppichs 21 werden in Verbindung mit den mechanischen Bedingungen, insbesondere der gemeinsamen Oberflächengeschwindigkeit des Transportbandes 1 sowie der übrigen Elemente so aufeinander abgestimmt, dass nachfolgend an das Umlenkende 8 eine gewisse Vorverfestigung oder Vorkristallisierung der Überzugsmasse 16 auf den Süßwarenkörpern 32 eintritt. In diesem Zustand werden die überzogenen Süßwarenkörper 32 über den Spalt 11 geführt, wobei sie in den Bereich einer oder mehrerer Leckwellen 12 geraten. Diese Leckwellen 12 überbrücken einerseits den Spalt 11 und nehmen von den Randbereichen 34 der Süßwarenkörper 32 noch geringfügig Überzugsmasse 16 ab, wobei diese Überzugsmasse in der Regel in Form von Tropfen in die Wanne 15 herabfällt. Zur Unterstützung dieser Wirkung und zur kontinuierlichen Säuberung der Oberfläche der Leckwellen 12 dienen die Abstreifer 13. Die Überzugsmasse 16 kann auch während des Überziehvorgangs temperaturmäßig behandelt und eingestellt werden. Zu diesem Zweck ist insbesondere die Trommel 23 mit einer Temperiereinrichtung verbunden. Beispielsweise kann der Innenraum der Trommel 23 an einen Temperierkreislauf angeschlossen sein. Auch die Verwendung von Heizeinrichtungen kann sinnvoll sein, je nach der Art der Überzugsmasse 16.

Auf diese Art und Weise gelangen die Süßwarenkörper 32 auf das Austrageband 9. Sie sind sauber, gewichtsgenau und reproduzierbar im Bereich ihrer Oberflächen 33 und an ihren Randbereichen 34 überzogen, wobei die Böden 35 von Überzugsmasse 16 freigehalten sind. Je nach der Art der Überzugsmasse 16 kann dann eine Weiterbehandlung auf dem Austrageband 9 oder in nachgeschalteten Einrichtungen, beispielsweise in einem Kühl- oder Trocknungskanal, erfolgen. Durch die Bildung eines Teppichs 21 wird die Schichtdicke des Überzugs reproduzierbar eingehalten. Es können auch Überzüge in einem solchen einstufigen Verfahren aufgebracht werden, die Schichtdicken von 1 und mehr mm umfassen.

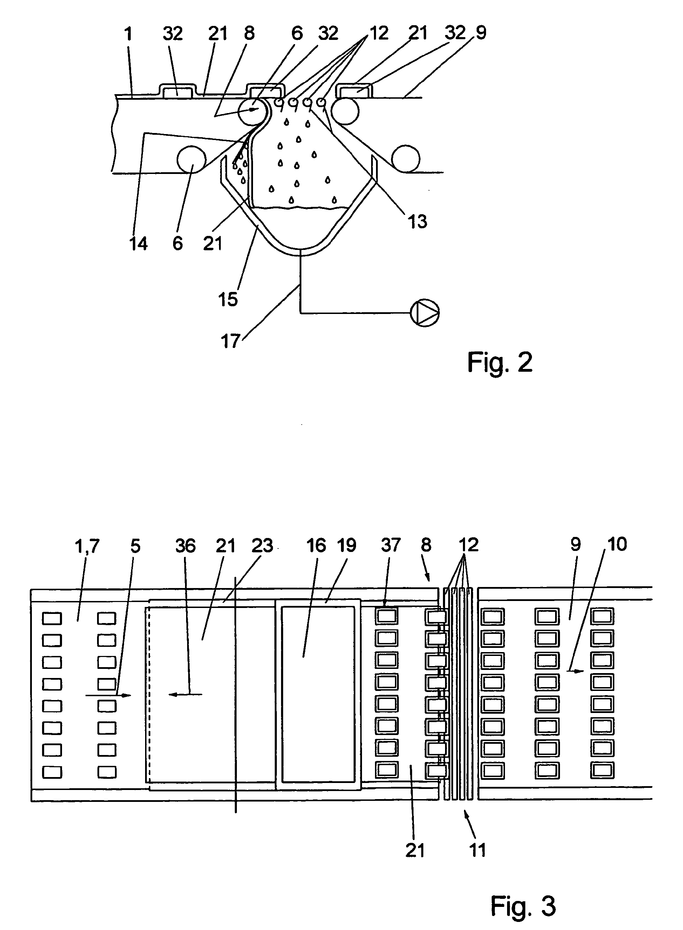

**Fig. 2** verdeutlicht noch einmal die Verhältnisse im Bereich des Umlenkendes 8 des Transportbandes 1 und die Trennung des überschüssigen Teils der Überzugsmasse 16 von dem Teil der Überzugsmasse 16, die bestimmungsgemäß als Beschichtungsmasse auf der Oberfläche 33 und an den Randbereichen 34 der Süßwarenkörper 32 verbleibt.

**Fig. 3** zeigt eine Draufsicht auf wesentliche Teile der Vorrichtung. Es ist erkennbar, dass hier acht Süßwarenkörper 32 zeilen- und reihenweise ausgerichtet nebeneinander auf den Anfangsbereich 7 aufgelegt werden. Damit wird die Arbeitsbreite des Transportbandes 1 entsprechend genutzt. Auf der Oberfläche der Trommel 23 wird der Teppich 21 gebildet, der sich in Richtung gemäß Pfeil 36 mit der Trommel 23 bei deren Umlauf nach unten bewegt. Der Teppich 21 deckt die gesamte Arbeitsbreite des Transportbandes 1 so ab, dass auch die äußeren Reihen der Süßwarenkörper 32 mit allseitigem Überschuss abgedeckt werden. Die Kontur der abgedeckten Süßwarenkörper 37 bildet sich in Richtung auf das Umlenkende 8 entsprechend ab. Der überschüssige Teil der Überzugsmasse 16 bzw. des Teppichs 21 wird zu Beginn des Spaltes 11 nach unten abgeführt. Die so überzogenen Süßwarenkörper 32 bzw. 37 werden randseitig bzw. bodenseitig durch die Leckwellen 12 weiter gereinigt und gelangen so reihenweise einzeln überzogen auf die Oberfläche des Austragebandes 9, welches mit gleicher Geschwindigkeit wie das Transportband 1 gemäß Pfeil 10 bewegt wird. Alternativ ist es auch möglich, die Antriebsgeschwindigkeit des Austragebandes 9 vergleichsweise zu steigern, um die Reihen der Süßwarenkörper 37 auseinander zu rücken.

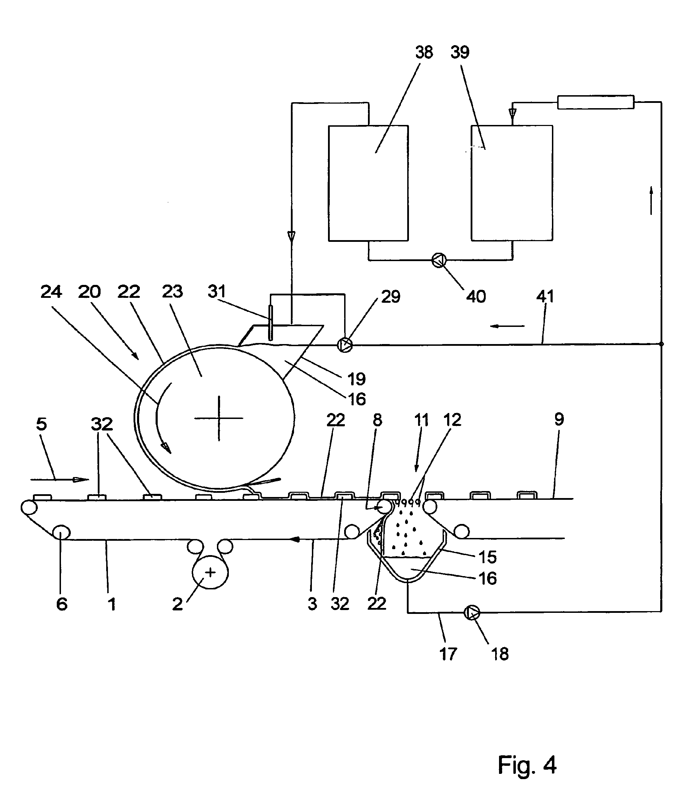

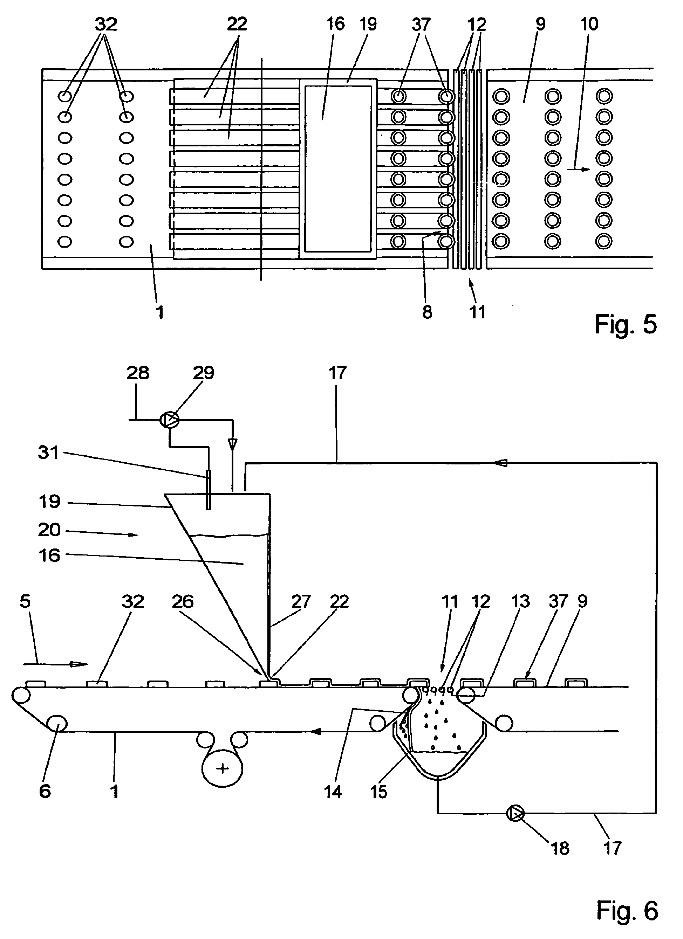

Die Ausführungsform der Vorrichtung gemäß **Fig. 4** **und** **5** stimmt in weiten Bereichen mit der Ausführungsform der Fig. 1 bis 3 überein, weshalb hierauf verwiesen werden kann. Anders als dort besitzen hier die Süßwarenkörper 32 runde Gestalt. Es handelt sich beispielsweise um Rundkekse, die im Bereich ihrer Oberfläche 33 sowie der Randbereiche 34 überzogen werden sollen. Statt eines über die Arbeitsbreite durchgehenden Teppichs 21 werden hier einzelne Teppichstreifen 22 auf der Oberfläche der Trommel 23 gebildet. Es besteht eine zeilenweise Ausrichtung der Teppichstreifen 22 zu den Zeilen der Süßwarenkörper 32 dergestalt, dass die Süßwarenkörper 32 einer Zeile durch einen Teppichstreifen 22 komplett abgedeckt werden, wie dies insbesondere Fig. 5 zeigt. Damit wird an diesem Beispiel verdeutlicht, dass sich die überschüssige Verwendung der Überzugsmasse 16 jedenfalls auf eine Raumrichtung, hier die Arbeitsrichtung bzw. Laufrichtung bezieht. Es ist zugleich leicht vorstellbar, dass zur Bildung der Teppichstreifen 21 das Wehr 27 entsprechend gestaltet ist bzw. nur ein durchgehendes Wehr 27 gegen ein gestuft ausgebildetes Wehr ausgetauscht werden muss, um anstelle eines durchgehenden Teppichs 21 eine Mehrzahl von Teppichstreifen 22 zu bilden und zum Überziehen zu nutzen. Es ist auch vorstellbar, dass eine Veränderung der Anordnungsstelle dieses Wehrs quer zur Arbeitsrichtung dazu genutzt werden kann, um beispielsweise nur einen Teil der Oberfläche 33 der Süßwarenkörper 32 sowie der zugehörigen Randbereiche 34 zu überziehen, um auf diese Art und Weise eine Dekorwirkung an den Produkten zu verwirklichen.

Die Vorrichtung gemäß **Fig. 4** **und** **5** ist für die Aufbringung einer fließfähigen Schokolademasse als Überzugsmasse 16 ausgebildet. Solche fetthaltigen Massen werden durch Vorkristallisation und Weiterkristallisation verfestigt. Die Vorkristallisation wird in einer Temperierstation 38 eingeleitet, der ein Dekristallisator 39 vorgeschaltet ist. Die Rückführleitung 17 erstreckt sich durch den Dekristallisator 39 und die Temperierstation 38. In der Leitung 17 kann eine weitere Pumpe 40 vorgesehen sein. Eine Überbrückungsleitung 41, in der die Pumpe 29 angeordnet ist, kann über den Fühler 31 so gesteuert werden, dass der Kristallisationsgrad der Überzugsmasse 16 in dem Vorratsbehälter 19 konstant gehalten wird.

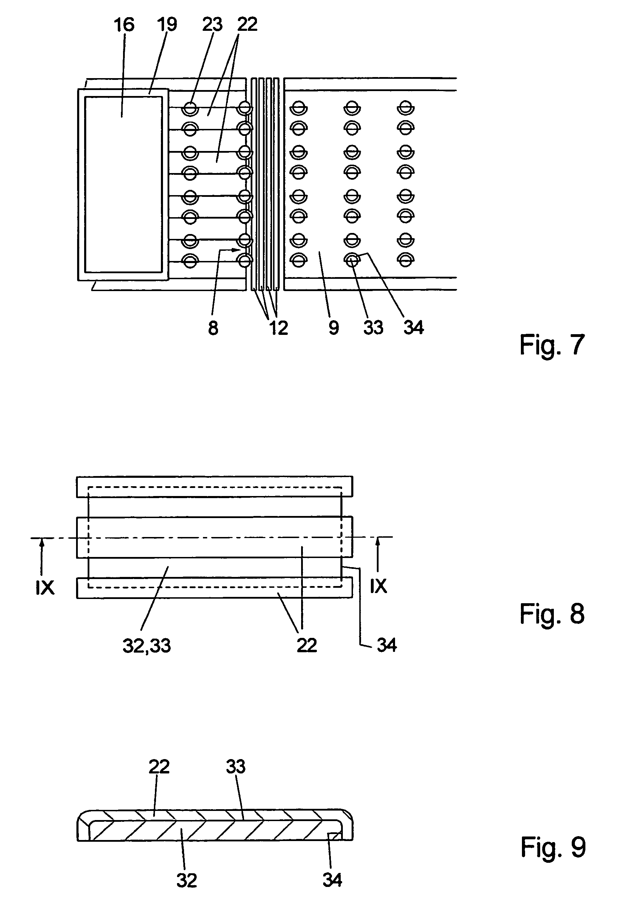

In den **Fig. 6** **und** **7** ist eine weitere Ausführungsform der Vorrichtung dargestellt. Bezüglich des grundsätzlichen Aufbaus kann auf die vorangehende Beschreibung verwiesen werden. Die Einrichtung 20 ist hier etwas anders ausgebildet. Der Vorratsbehälter 19 besitzt hier an seinem unteren Ende einen Spalt 26, dessen Spaltweite durch das Wehr 27 verstellbar ausgebildet ist. Durch Ausfließen der Überzugsmasse 16 aus dem Vorratsbehälter 19 wird hier unmittelbar ein Teppich bzw. einzelne Teppichstreifen 22 gebildet, die auf die Süßwarenhohlkörper 32 auf dem Transportband 1 abgelegt werden. Die Ausfließgeschwindigkeit der Teppichstreifen 22 begrenzt die mögliche Oberflächengeschwindigkeit des Transportbandes 1. Wie Fig. 7 erkennen lässt, sind die gebildeten Teppichstreifen 22 versetzt abgelegt, so dass von jedem Teppichstreifen 22 zwei in Reihe nebeneinander liegende Süßwarenkörper 32 jeweils halbkreisförmig abgedeckt und damit beschichtet werden. Damit werden auf dem Austrageband 9 z. B. Rundkekse abgefördert, die auf ihrer halben Oberfläche 33 und den entsprechenden anschließenden Randbereichen 34 überzogen sind.

In den **Fig. 8 und 9** wird eine weitere Möglichkeit des Dekorierens von Süßwarenkörpern 32 verdeutlicht. Auch hier werden Teppichstreifen 22 benutzt, um das sich ergebende Dekor zu bilden. Die Überzugsmasse 16 wird auf einem Teil der Oberfläche 33 und auf einem Teil der Randbereiche 34 aufgebracht.

### BEZUGSZEICHENLISTE

- 1: Transportband
- 2: Antriebswalze
- 3: Pfeil
- 4: Oberfläche
- 5: Pfeil
- 6: Umlenkrolle
- 7: Anfangsbereich
- 8: Umlenkende
- 9: Austrageband
- 10: Pfeil

- 11: Spalt
- 12: Leckwelle
- 13: Abstreifer
- 14: Abstreifer
- 15: Wanne
- 16: Überzugsmasse
- 17: Rückführleitung
- 18: Pumpe
- 19: Vorratsbehälter
- 20: Einrichtung

- 21: Teppich
- 22: Teppichstreifen
- 23: Trommel
- 24: Pfeil
- 25: Abstreifer
- 26: Spalt
- 27: Wehr
- 28: Leitung
- 29: Pumpe
- 30: Pfeil

- 31: Fühler
- 32: Süßwarenkörper
- 33: Oberfläche
- 34: Randbereich
- 35: Boden
- 36: Pfeil
- 37: Süßwarenkörper
- 38: Temperierstation
- 39: Dekristallisator
- 40: Pumpe
- 41: Überbrückungsleitung

## Patentansprüche

1. Verfahren zum einseitigen Überziehen von Süßwarenkörpern (32) mit einer fließfähigen Überzugsmasse (16), indem die Süßwarenkörper (32) auf einem endlosen angetriebenen Transportband (1) aufliegend gefördert und dabei mit einem überschüssig bemessenen Teppich (21) aus der fließfähigen Überzugsmasse (16) auf der zu überziehenden Oberfläche (33) einschließlich mindestens eines Randbereiches (34) der Süßwarenkörper (32) abgedeckt werden, **dadurch gekennzeichnet, dass** die Süßwarenkörper (32) auf ein Transportband (1) mit geschlossener Oberfläche (4) aufgelegt und so aufliegend mit dem zumindest in Arbeitsrichtung überschüssig bemessenen Teppich (21, 22) abgedeckt werden, wobei die Bildungsgeschwindigkeit des Teppichs (21, 22) mindestens so groß wie die Bewegungsgeschwindigkeit des Transportbandes (1) ist, und dass der nicht auf den Süßwarenkörpern (32) verbleibende Teil des Teppichs (21, 22) an Überzugsmasse (16) am Umlenkende (8) des Transportbandes (1) von diesem unter Richtungsänderung mitgenommen und dabei von dem den Randbereich (34) des Süßwarenkörpers (32) abdeckenden Teppich (21, 22) abgetrennt wird.

2. Verfahren nach Anspruch 1, **dadurch gekennzeichnet, dass** die Süßwarenkörper (32) mit einem über die Arbeitsbreite des Transportbandes (1) reichenden Teppich (21) aus fließfähiger Überzugsmasse (16) vollflächig abgedeckt werden.

3. Verfahren nach Anspruch 1, **dadurch gekennzeichnet, dass** die Süßwarenkörper (32) mit mehreren nur über einen Teil der Arbeitsbreite des Transportbandes (1) reichenden Teppichstreifen (22) aus fließfähiger Überzugsmasse (16) teil- oder vollflächig abgedeckt werden.

4. Verfahren nach mindestens einem der Ansprüche 1 bis 3, **dadurch gekennzeichnet, dass** die einseitig überzogenen Süßwarenkörper (37) über mindestens eine Leckwelle (12) in ihrem Randbereich (34) gesäubert und an ein Austrageband (9) übergeben werden.

5. Vorrichtung zum einseitigen Überziehen von Süßwarenkörpern (32) mit einer fließfähigen Überzugsmasse (16), insbesondere nach einem der Ansprüche 1 bis 4, mit einer Einrichtung (20) zur Bildung und Abgabe eines Teppichs (21, 22) aus fließfähiger Überzugsmasse (16) und einem endlosen angetriebenen Transportband (1), auf dem die Süßwarenkörper (32) abständig aufliegend gefördert und dabei mit dem überschüssig bemessenen Teppich (21, 22) aus der fließfähigen Überzugsmasse (16) auf der zu überziehenden Oberfläche (33) einschließlich mindestens eines Randbereiches (34) der Süßwarenkörper (32) abgedeckt werden, **dadurch gekennzeichnet, dass** das Transportband (1) zur Behinderung des Abfließens der Überzugsmasse (16) in dem Randbereich (34) eine geschlossene Oberfläche (4) aufweist, dass am Umlenkende (8) des Transportbandes (1) ein anstellbarer Abstreifer (14) zur Abnahme des nicht auf den Süßwarenkörpern (37) verbleibenden Teils des Teppichs (21, 22) an Überzugsmasse (16) angeordnet ist, und dass dem Transportband (1) ein Austrageband (9) unter Spaltbildung nachgeschaltet ist, um den nicht auf dem Süßwarenkörper (32) verbleibenden Teil des Teppichs (21, 22) aus Überzugsmasse (16) am Umlenkende (8) des Transportbandes (1) unter Richtungsänderung mitzunehmen und dabei von dem den Randbereich (34) des Süßwarenkörpers (32) abdeckenden Teppich (21, 22) abzutrennen.

6. Vorrichtung nach Anspruch 5, **dadurch gekennzeichnet, dass** zwischen dem Umlenkende (8) des Transportbandes (1) und dem Beginn des Austragebandes (9) mindestens eine angetriebene Leckwelle (12) zur Säuberung der Ränder der Süßwarenkörper (37) vorgesehen ist.

7. Vorrichtung nach Anspruch 5 oder 6, **dadurch gekennzeichnet, dass** die Einrichtung (20) zur kontinuierlichen Bildung und Abgabe eines Teppichs (21) oder mehrerer Teppichstreifen (22) aus fließfähiger Überzugsmasse (16) eine angetriebene Trommel (23) aufweist, gegen deren Oberfläche ein Vorratsbehälter (19) für die fließfähige Überzugsmasse (16) unter Spaltbildung angestellt ist, und dass ein Antrieb für die Trommel (23) mit einer Oberflächengeschwindigkeit vorgesehen ist, die größer oder zumindest gleich der Oberflächengeschwindigkeit des Transportbandes (1) ist.

8. Vorrichtung nach Anspruch 5 oder 6, **dadurch gekennzeichnet, dass** die Einrichtung (20) zur kontinuierlichen Bildung und Abgabe eines Teppichs (21) oder mehrerer Teppichstreifen (22) aus fließfähiger Überzugsmasse (16) einen Vorratsbehälter (19) für die Überzugsmasse aufweist, der im unteren Bereich einen sich quer zur Laufrichtung des Transportbandes (1) erstreckenden Schlitz (26) zum Austritt des Teppichs (21) oder von Schlitzabschnitten zum Austritt der Teppichstreifen (22) unter Schwerkrafteinfluss besitzt.

9. Vorrichtung nach mindestens einem der Ansprüche 5 bis 8, **dadurch gekennzeichnet, dass** das Transportband (1) mit der geschlossenen Oberfläche (4) aus einem Metallband, aus Kunststoff, aus Gewebe o. dgl. besteht oder derartige Bestandteile aufweist.

10. Vorrichtung nach mindestens einem der Ansprüche 5 bis 9, **dadurch gekennzeichnet, dass** der Spalt (26) an dem Vorratsbehälter (19) für die Überzugsmasse (16) in seiner Spaltweite ver- und einstellbar ausgebildet ist.

11. Vorrichtung nach mindestens einem der Ansprüche 5 bis 10, **dadurch gekennzeichnet, dass** die Trommel (23) und/oder der Vorratsbehälter (19) temperierbar ausgebildet ist.

12. Vorrichtung nach mindestens einem der Ansprüche 5 bis 11, **dadurch gekennzeichnet, dass** die Trommel (23) und/oder der Vorratsbehälter (19) relativ zu der Oberfläche des Transportbandes (1) und oberhalb desselben höhenverstellbar angeordnet ist.

## Claims

1. A method for single-sided coating of confectionery articles (32) with a flowing coating mass (16), by conveying the confectionery articles (32) lying on a driven endless conveyor belt (1) and covering the surface (33) of the conveyed confectionery articles including at least a border portion (34) of the conveyed confectionery articles with a layer (21) of flowing coating mass (16) in surplus, **characterized in that** the confectionery articles (32) are laid down on a conveyor belt (1), the conveyor belt having a closed surface (4), and in thus lying condition are covered with the layer (21, 22), the layer being dimensioned in surplus at least in the working direction, the forming speed of the layer (21, 22) being at least as quick as the moving speed of the conveyor belt (1), and **in that** the part of the layer (21, 22) of the liquid coating mass (16) not remaining on the confectionery articles is entrained taking a change of the conveying direction at the turning round end (8) of the conveyor belt (1) and thereby being broken away from the layer (21, 22) covering the border portion (34) of the conveyed confectionery articles.

2. The method of claim 1, **characterized in that** the confectionery articles (32) are covered all over with a layer (21) of flowing coating mass (16) extending over the working width of the conveyor belt (1).

3. The method of claim 1, **characterized in that** the confectionery articles (32) are covered partly or all over with a number of layers (22) of flowing coating mass (16) only extending over a part of the working width of the conveyor belt (1).

4. The method of at least one of the claims 1 to 3, **characterized in that** the confectionery articles (32) being single-sided coated are cleaned in the region of the border portion (34) of the conveyed confectionery articles by at least one licking shaft (12) and are transferred to a delivery belt (9).

5. A device for single-sided coating of confectionery articles (32) with a flowing coating mass (16), especially one of the of claims 1 to 4, including a unit (20) to form and deliver a layer (21, 22) of flowing coating mass (16) and a driven endless conveyor belt (1), on which the confectionery articles (32) lying with distance to each other are conveyed and are covered on the surface (33) of the conveyed confectionery articles to be covered including at least a border portion (34) of the conveyed confectionery articles with a layer (21) of flowing coating mass (16) in surplus, **characterized in that** the conveyor belt (1) has a closed surface (4) to hinder the flowing away of the coating mass (16) from the border portion (34) of the conveyed confectionery articles, **in that** an adjustable scraper (14) is arranged at the turning round end (8) of the conveyor belt (1) to separate the part of the layer (21, 22) of the liquid coating mass (16) not remaining on the confectionery articles (37), and **in that** a delivery belt (9) is positioned downstream the conveyor belt (1) with distance forming a gap to entrain the part of the layer (21, 22) of the liquid coating mass (16) not remaining on the confectionery articles (32) with taking a change of the conveying direction at the turning round end (8) of the conveyor belt (1) and thereby breaking away the not remaining part of the layer from the part of the layer (21, 22) covering the border portion (34) of the conveyed confectionery articles (32).

6. The device of claim 5, **characterized in that** at least one driven licking shaft (12) is arranged between the turning round end (8) of the conveyor belt (1) and the beginning of the delivery belt (9) to clean the rims of the confectionery articles (32).

7. The device of claim 5 or 6, **characterized in that** the unit (20) for the continuously forming and delivering a layer (21) or a number of layer stripes (22) of flowing coating mass (16) includes a driven drum (23), a reservoir (19) filled with the flowing coating mass (16) being positioned with respect to the surface of the drum to form a gap, and **in that** a drive for the drum (23) is designed and arranged causing a surface speed of the drum being quicker or at least equal to the surface speed of the conveyor belt (1).

8. The device of claim 5 or 6, **characterized in that** the unit (20) for the continuously forming and delivering a layer (21) or a number of layer stripes (22) of flowing coating mass (16) includes a reservoir (19) for the flowing coating mass (16), the reservoir having a slit (26) for the delivery of the layer (21) or slit portions for the delivery of the layer stripes (22) under the influence of gravity, the slit or the slits extending in the lower portion of the reservoir perpendicular to the running direction of the conveyor belt (1).

9. The device of at least one of the claims 5 to 8, **characterized in that** the conveyor belt (1) having the closed surface (4) is a band of metal, a band of plastic material, a band of woven fabric or the like or contains such materials.

10. The device of at least one of the claims 5 to 9, **characterized in that** the width of the gap (26) formed with the reservoir (19) for the coating mass (16) is designed to be adjusted or set.

11. The device of at least one of the claims 5 to 10, **characterized in that** the drum (23) and/or the reservoir (19) is designed and arranged to be tempered.

12. The device of at least one of the claims 5 to 11, **characterized in that** the drum (23) and/or the reservoir (19) is designed and arranged to be adjustable with respect to the surface of the conveyor belt (1) and above it.

## Revendications

1. Procédé pour la couverture unilatérale de corps de confiserie (32) par une matière de couverture (16) fluide, dans lequel les corps de confiserie (32) sont transportés en étant déposés sur une bande transporteuse (1) continue entraînée et, à cette occasion, sont recouverts par une couche de couverture (21) surdimensionnée en matière de couverture (16) fluide déposée sur la surface (33) à recouvrir, y compris au moins une zone de bordure (34) des corps de confiserie (32), **caractérisé en ce que** les corps de confiserie (32) sont déposés sur une bande transporteuse (1) avec une surface (4) fermée et, ainsi posés, sont recouverts d'une couche de couverture (21, 22) surdimensionnée au moins dans la direction de travail, la vitesse de formation de la couche de couverture (21, 22) est au moins égale à la vitesse de déplacement de la bande transporteuse (1), et **en ce que** la partie de la couche de couverture (21, 22) en matière de couverture (16), ne restant pas sur les corps de confiserie (32), est entraînée au niveau de l'extrémité de renvoi (8) de la bande transporteuse (1) par celle-ci moyennant un changement de direction et, à cette occasion, est séparée de la couche de couverture (21, 22) recouvrant la zone de bordure (34) du corps de confiserie (32).

2. Procédé selon la revendication 1, **caractérisé en ce que** les corps de confiserie (32) sont recouverts sur toute la surface par une couche de couverture (21) en matière de couverture (16) fluide, s'étendant sur toute la largeur de travail de la bande transporteuse (1).

3. Procédé selon la revendication 1, **caractérisé en ce que** les corps de confiserie (32) sont recouverts sur une partie ou sur toute la surface par plusieurs bandes de couverture (22) en matière de couverture (16) fluide, qui s'étendent uniquement sur une partie de la largeur de travail de la bande transporteuse (1).

4. Procédé selon au moins l'une des revendications 1 à 3, **caractérisé en ce que** les corps de confiserie (32) recouverts sur une face sont nettoyés dans leur zone de bordure (34) par au moins un arbre de léchage (12) et sont transférés sur une bande d'évacuation (9).

5. Dispositif pour la couverture unilatérale de corps de confiserie (32) par une matière de couverture (16) fluide, en particulier selon l'une des revendications 1 à 4, comportant un dispositif (20) pour la formation et la distribution d'une couche de couverture (21, 22) en matière de couverture (16) fluide et une bande transporteuse (1) continue entraînée, sur laquelle sont transportés les corps de confiserie (32), déposés à distance les uns des autres, et, à cette occasion, sont recouverts par une couche de couverture (21, 22) surdimensionnée en matière de couverture (16) fluide sur la surface (33) à recouvrir, y compris au moins une zone de bordure (34) des corps de confiserie (32), **caractérisé en ce que** la bande transporteuse (1) comporte une surface (4) fermée pour empêcher la fuite de la matière de couverture (16) dans la zone de bordure (34), **en ce qu'**au niveau de l'extrémité de renvoi (8) de la bande transporteuse (1) est disposé un racleur (14) réglable pour éliminer la partie de la couche de couverture (21, 22) en matière de couverture (16) ne restant pas sur les corps de confiserie (32), et **en ce qu'**une bande d'évacuation (9) est montée en aval de la bande transporteuse (1) moyennant la formation d'une fente, en vue d'entraîner la partie de la couche de couverture (21, 22) en matière de couverture (16), ne restant pas sur les corps de confiserie (32), au niveau de l'extrémité de renvoi (8) de la bande transporteuse (1) moyennant un changement de direction et, à cette occasion, en vue de la séparer de la couche de couverture (21, 22) recouvrant la zone de bordure (34) du corps de confiserie (32).

6. Dispositif selon la revendication 5, **caractérisé en ce qu'**au moins un arbre de léchage (12) entraîné, destiné à nettoyer les bords des corps de confiserie (32), est prévu entre l'extrémité de renvoi (8) de la bande transporteuse (1) et le début de la bande d'évacuation (9).

7. Dispositif selon la revendication 5 ou 6, **caractérisé en ce que** le dispositif (20) pour la formation et la distribution continues d'une couche de couverture (21) ou de plusieurs bandes de couverture (22) en matière de couverture (16) fluide, comporte un tambour (23) actionné, contre la surface duquel est posé, moyennant la formation d'une fente, un réservoir de stockage (19) pour la matière de couverture (16) fluide, et **en ce que** le système d'entraînement du tambour (23) est prévu avec une vitesse en surface qui est supérieure ou au moins égale à la vitesse en surface de la bande transporteuse (1).

8. Dispositif selon la revendication 5 ou 6, **caractérisé en ce que** le dispositif (20) pour la formation et la distribution continues d'une couche de couverture (21) ou de plusieurs bandes de couverture (22) en matière de couverture (16) fluide, comporte un réservoir de stockage (19) pour la matière de couverture (16) fluide, qui comporte dans la zone inférieure une fente (26), orientée transversalement à la direction de défilement de la bande transporteuse (1) et destinée à l'évacuation de la couche de couverture (21), ou des segments de fente pour l'évacuation de bandes de couverture (22) sous l'effet de la force de gravité.

9. Dispositif selon au moins l'une des revendications 5 à 8 **caractérisé en ce que** la bande transporteuse (1) avec la surface (4) fermée est réalisée dans une bande en métal, en matière plastique, en textile ou similaire ou contient des composants de ce type.

10. Dispositif selon au moins l'une des revendications 5 à 9 **caractérisé en ce que** la fente (26) au niveau du réservoir de stockage (19) pour la matière de couverture (16) fluide, est réalisée avec une largeur modifiable et réglable.

11. Dispositif selon au moins l'une des revendications 5 à 10 **caractérisé en ce que** le tambour (23) et/ou le réservoir de stockage (19) sont réalisés de manière à pouvoir être tempérés.

12. Dispositif selon au moins l'une des revendications 5 à 11 **caractérisé en ce que** le tambour (23) et/ou le réservoir de stockage (19) sont disposés de manière réglable en hauteur par rapport à la surface de la bande transporteuse (1) et au-dessus de celle-ci.
